Europäisches Patentamt

European Patent Office

Office européen des brevets

(11) Publication number: **0 334 519**
**A2**

(12) **EUROPEAN PATENT APPLICATION**

(21) Application number: **89302415.8**

(51) Int. Cl.⁴: **F16K 7/08**

(22) Date of filing: **10.03.89**

(30) Priority: **18.03.88 GB 8806553**

(43) Date of publication of application:
**27.09.89 Bulletin 89/39**

(84) Designated Contracting States:
**BE DE ES FR GB IT**

(71) Applicant: **Norman, Leslie David**
**102 The Gore**
**Basildon Essex(GB)**

Applicant: **Morris, Thomas Albert**
**21 Nelson Road**
**Basildon Essex(GB)**

(72) Inventor: **Norman, Leslie David**
**102 The Gore**
**Basildon Essex(GB)**
Inventor: **Morris, Thomas Albert**
**21 Nelson Road**
**Basildon Essex(GB)**

(74) Representative: **Devons, David Jon**
**MARKS & CLERK 57-60 Lincoln's Inn Fields**
**London WC2A 3LS(GB)**

(54) **A flow control member for a flow control valve.**

(57) A flow control member for a flow control valve comprises a flexible cylindrical sleeve (4) inwardly deformable by relative rotation of the circular ends thereof to restrict the rate of flow therethrough. The sleeve (4) comprises a first cylindrical portion (4a) formed of a close-mesh textile material and a second cylindrical portion (4b) formed of an elastomeric material fixedly connected to and coaxial with the first portion (4a). The relative lengths of the first and second portions (4a,4b) are such that, in use, the connection (4c) between the first and second portions (4a,4b) lies at or downstream of the cross-sectional area of greatest restriction of the sleeve (4). The sleeve reduces or prevents high levels of noise or "drumming" which often occur in flow control valves utilising elastomeric sleeves which are inwardly deformable to restrict flow therethrough.

FIG.1.

# A flow control member for a flow control valve.

The present invention relates to a flow control member for a flow control valve, said control member comprising a flexible cylindrical sleeve inwardly deformable by relative rotation of the circular ends thereof to restrict the rate of flow therethrough.

Known control members of this type (see, for example, GB 1,379,772 and GB 2,097,514A) are one-piece sleeves made from elastomeric materials which suffer from the disadvantage that, in certain applications, the sleeve forms flutes as it is twisted, which flutes vibrate under the influence of the air stream passing through the sleeve. This causes high levels of noise (often referred to as "drumming") which is naturally undesirable.

An object of the invention is to provide an improved flow control member for a flow control valve which inhibits or prevents the disadvantage referred to above.

A flow control member according to the present invention is characterised in that the sleeve comprises a first cylindrical portion formed of a close-mesh textile material and a second cylindrical portion formed of an elastomeric material fixedly connected to and coaxial with the first portion, the relative lengths of the first and second portions being such that, in use, the connection between the first and second portions lies at or downstream of the section of greatest restriction of the sleeve. Introduction of a close-mesh portion of the sleeve greatly reduces the high frequency vibration of the sleeve and therefore reduces drumming.

Preferably, the first cylindrical portion forms an inlet portion of the sleeve in order that air entering the deformed sleeve encounters only close-mesh textile material prior to passing the section of geatest restriction. More preferably, the connection lies at the apex of the conical inlet portion formed by twisting the circular ends of the sleeve to a fully-closed position. This arrangement allows a maximum length of elastomeric material to be utilised which subjects the elastomeric outlet potion to less strain as the sleeve is twisted than would otherwise occur.

Preferably, the close-mesh textile material is knitted or woven. Such materials provide the first portion with sufficient flexibility and strength to carry out its function reliably.

Preferably, a flow control valve comprising a pair of axially aligned, relatively rotatable cylindrical members forming a flow duct, a flexible cylindrical sleeve forming at least the inner surface of the flow duct with said flexible sleeve anchored at or adjacent its ends to the respective rotatable cylindrical members, and means for effecting said relative rotation of the members, wherein the flexible cylindrical sleeve is as described above. This provides a valve which operates quietly and effectively with little or no drumming.

Preferably, the relative rotation of the members is effected by a power driven belt. This arrangement allows the valve to be operated remotely. The belt may preferably comprise an internally-toothed power belt. Alternatively, the valve may be operated by manual means.

Preferably, the valve is adapted so as to be capable of controlling air pressures of up to 1500 pascals at air volumes of up to 900 litres/second.

Examples of a flow control member and a flow control valve, each according to the invention will now be described by way of example only with reference to the accompanying drawings wherein:

Figure 1 shows a cross-sectional view of a flow control member according to the present invention;

Figure 2 shows in perspective a flow control valve according to the present invention in the open position;

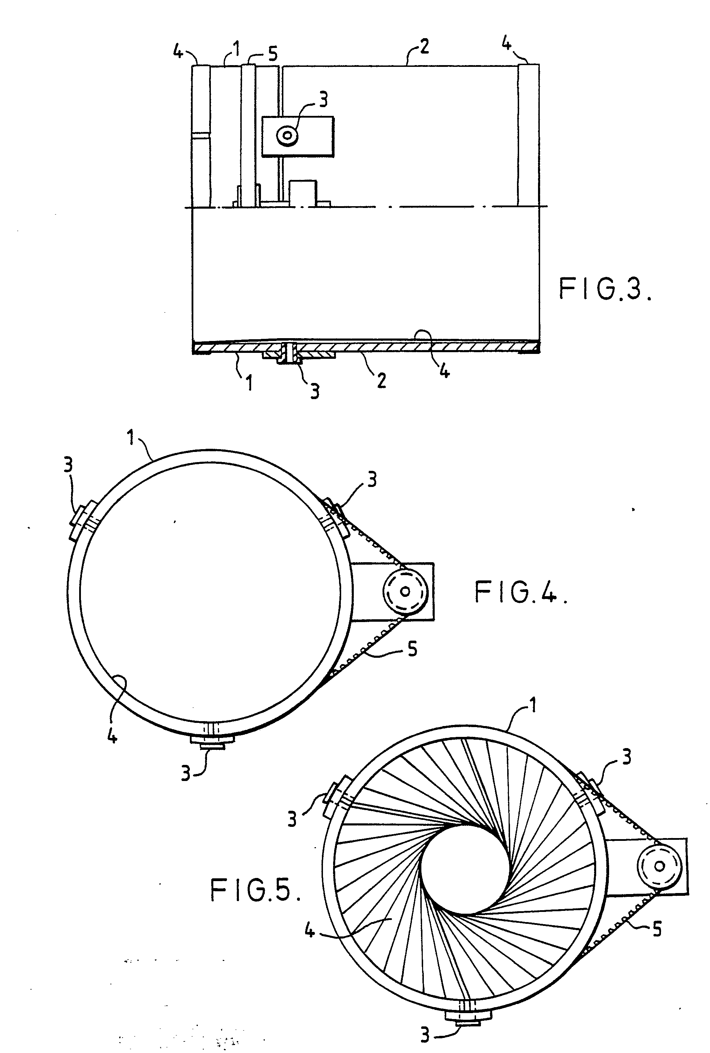

Figure 3 shows in side elevation/section the flow control valve of Figure 2 in the fully open position;

Figure 4 shows in end elevation the flow control valve of Figures 2 and 3 in the fully open position;

Figure 5 shows in end elevation the flow control valve of Figures 2 to 4 in a partially closed position; and

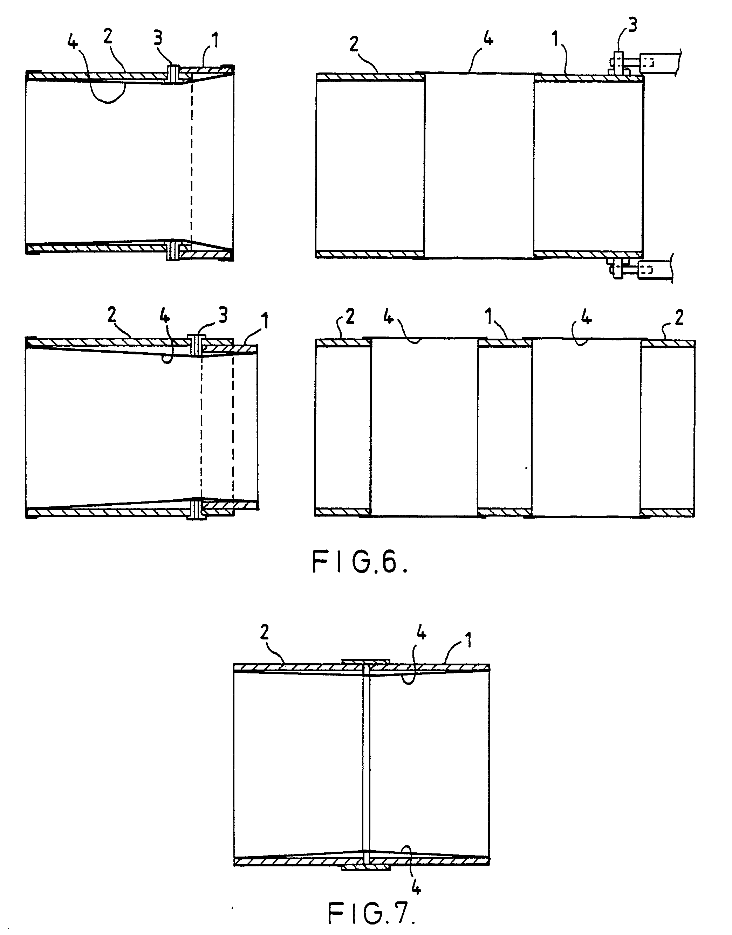

Figure 6 and Figure 7 shows alternative methods of mounting the cylindrical members and the flexible member.

Referring to the drawings, the flow control valve comprises a pair of axially aligned, relatively rotatable cylindrical members 1, 2 forming an air flow duct. Bearing means 3 are provided between adjacent end surfaces of the cylindrical members 1, 2 to ensure free rotative sliding movement therebetween.

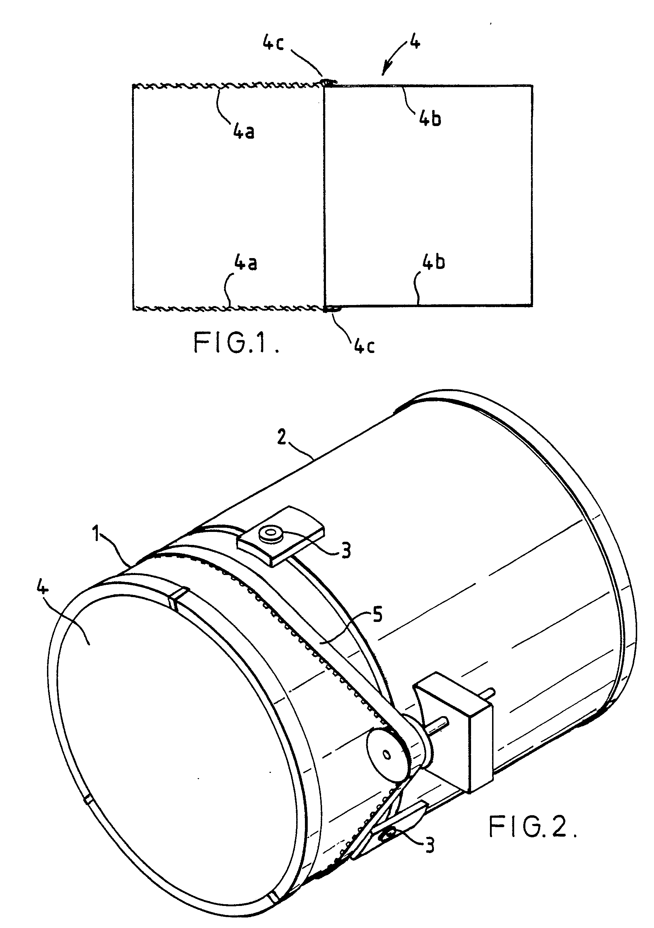

A flexible cylindrical member 4 (Figure 1) is positioned within the air flow duct with its ends turned over and anchored, respectively, to the outer ends of the tubular members. The member 4 comprises a flexible sleeve having an inlet portion 4a formed of a close-mesh, knitted fabric and an outlet portion 4b formed of a synthetic plastics material, the inlet and outlet portions being fixedly connected together in a co-axial relationship by stitching 4c.

Relative rotational movement of the cylindrical members 1, 2 causes an inward deformation of the flexible sleeve 4 in a manner similar to a camera iris resulting in a gradual reduction in the effective cross-sectional area of the air duct. In the fully closed position of the valve, the sleeve 4 assumes a conical shape and the close-mesh portion 4a extends from the valve inlet to the apex of the cone so formed. In the partially or fully closed position of the sleeve 4, the elastomeric material forming the outlet portion 4b acts in a manner similar to a torsion spring tending to return the sleeve 4 to its open position. The relative rotation of the cylindrical members is conveniently effected by fixing one cylindrical member 2 and rotating the other cylindrical member 1 relative thereto either manually or remotely be means of a known internally-toothed power belt 5 or gearing.

It will be readily appreciated that the close-mesh inlet portion 4a may be formed from any woven, felted or bonded material which prevents high frequency oscillation or "drumming" of the sleeve 4. The flow control member and valve described above each have good acoustic properites, which are advantageous. Also, the sleeve may be reversed in orientation with respect to the cylindrical members such that the close-mesh material portion forms the outlet portion and the elastomeric portion forms the inlet portion. In this event, the relative lengths of the inlet and outlet portions must be adjusted so that the join between the portions lies at or downstream of the cross-sectional of greatest restriction of the sleeve when the cylindrical members of the valve are rotated relative to one another.

## Claims

1. A flow control member for a flow control valve, said control member comprising a flexible cylindrical sleeve (4) inwardly deformable by relative rotation of the circular ends thereof to restrict the rate of flow therethrough, characterised in that the sleeve (4) comprises a first cylindrical portion (4a) formed of a close-mesh textile material and a second cylindrical portion (4b) formed of an elastomeric material fixedly connected to and co-axial with the first portion (4a), the relative lengths of the first and second portions (4a,4b) being such that, in use, the connection (4c) between the first and second portions (4a,4b) lies at or downstream of the cross-sectional area of greatest restriction of the sleeve (4).

2. A flow control member as claimed in claim 1, wherein the first cylindrical portion (4a) forms an inlet portion of the sleeve (4).

3. A flow control member as claimed in claim 2, wherein the connection (4c) lies at the apex of the conical inlet portion (4a) formed by twisting the circular ends of the sleeve (4) to a fully-closed position.

4. A flow control member as claimed in any one of claims 1 to 3, wherein said textile material is knitted.

5. A flow control member as claimed in any one of claims 1 to 3, wherein said textile material is woven.

6. A flow control valve comprising pair of axially aligned, relatively rotatable cylindrical members (1,2) forming a flow duct, a flexible cylindrical sleeve (4) forming at least the inner surface of the flow duct with said flexible sleeve (4) anchored at or adjacent its ends to the respective rotatable cylindrical members (1,2), and means for effecting said relative rotation of the members, wherein the flexible cylindrical sleeve (4) is as claimed in any one of claims 1 to 5.

7. A flow control valve as claimed in claim 6, wherein said relative rotation of the members (1,2) is effected by a power driven belt (5).

8. A flow control valve as claimed in claim 9, wherein said belt (5) is an internally-toothed power belt.

9. A flow control valve as claimed in claim 6, wherein said relative rotation of the members (1,2) is effected by manual means.

10. A flow control valve as claimed in any one of claims 6 to 9, wherein the valve is adapted so as to be capable of controlling air pressures of up to 1500 pascals at air volumes of up to 900 litres/second.

FIG.1.

FIG.2.

FIG.3.

FIG.4.

FIG.5.

FIG.6.

FIG.7.